# EUROPÄISCHE PATENTSCHRIFT

(11) **EP 4 126 614 B1**
(45) Veröffentlichungstag und Bekanntmachung des Hinweises auf die Patenterteilung: **06.05.2026**
(21) Anmeldenummer: 21718013.2
(22) Anmeldetag: 26.03.2021
(51) Int. Cl.: B60T 17/22, B60T 13/74

(54) **BREMSSYSTEM MIT WENIGSTENS ZWEI ENERGIEQUELLEN**
BRAKING SYSTEM WITH AT LEAST TWO ENERGY SOURCES
SYSTÈME DE FREINAGE AVEC AU MOINS DEUX SOURCES D'ÉNERGIE

(30) Priorität: 30.03.2020 DE 102020204102
(43) Veröffentlichungstag der Anmeldung: 08.02.2023
(73) Patentinhaber: AUMOVIO Germany GmbH, 60488 Frankfurt am Main (DE)
(72) Erfinder: BEUSS, Jochen, 60488 Frankfurt am Main (DE)
(74) Vertreter: Aumovio Corporation
(86) Internationale Anmeldenummer: PCT/DE2021/200041
(87) Internationale Veröffentlichungsnummer: WO 2021/197555

(56) Entgegenhaltungen:
- EP-A1- 1 758 778
- EP-B1- 1 758 778
- US-A1- 2005 200 194
- US-A1- 2010 314 934

## Beschreibung

Die Erfindung betrifft ein Bremssystem gemäß dem Oberbegriff des Anspruchs 1.

Bremssysteme mit wenigstens zwei Energiequellen und wenigstens zwei, insbesondere vier elektromechanischen Radbremsen, bei denen die elektromechanischen Radbremsen jeweils nur mit einer der Energiequellen, jedoch nicht mit beiden Energiequellen direkt verbunden sind, sind aus dem Stand der Technik bekannt.

So beschreibt das Dokument US 2005/200194 A1 ein Bremssystem mit einer Energieversorgung, die elektrische Energie liefert, und Bremskomponenten, die teilweise elektrisch betrieben werden. Dabei versorgt eine erste Stromversorgung eine erste Bremskomponente und eine zweite Stromversorgung eine zweite Bremskomponente. Eine ähnliche Anordnung beschreibt das Dokument EP 1 758 778 A1. Das Dokument US 2010/314934 A1 beschreibt ein weiteres elektronisches Bremssystem zum Betreiben einer elektromechanischen Parkbremse.

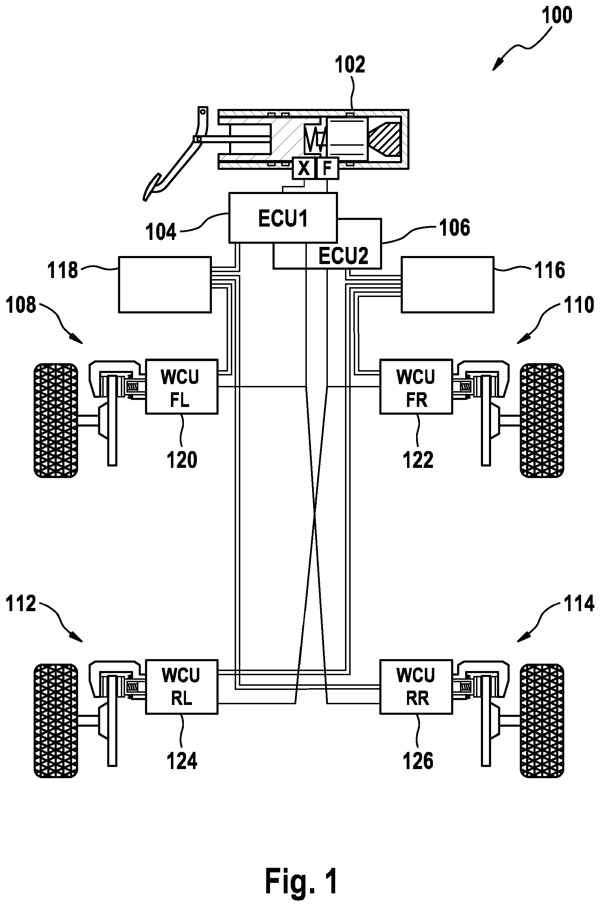

Exemplarisch ist ein solches Bremssystem in der Figur 1 schematisch dargestellt.

Das in der Figur 1 dargestellte Bremssystem 100 weist dabei eine Pedalbetätigungseinheit 102 auf, die im Wesentlichen aus einem Pedalgefühlsimulator besteht und lediglich dazu dient, bei Betätigung durch einen Fahrzeugführer ein entsprechendes Betätigungssignal zu ermitteln. Weiter weist das Bremssystem 100 zwei elektronische Steuereinheiten 104 und 106 auf, die mit der Pedalbetätigungseinheit 102 verbunden und dazu ausgebildet sind, auf Grundlage eines von der Pedalbetätigungseinheit 102 empfangenen Betätigungssignals Steuerbefehle zu erzeugen, die zur Ansteuerung der Radbremsen 108, 110, 112 und 114 geeignet sind. Zur Übertragung derartiger Steuerbefehle an die Radbremsen 108, 110, 112 und 114, sind die elektronischen Steuereinheiten 104 und 106 über entsprechende Kabelverbindungen mit den Radbremsen 108, 110, 112 und 114 verbunden. Dabei sind jeweils zwei Radbremsen mit einer einzelnen Steuereinheit verbunden, sodass sich zwei unabhängig voneinander gesteuerte Bremskreise ergeben. In dem dargestellten Beispiel ist beispielsweise die Steuereinheit 104 mit der vorderen linken Radbremse 108 und der hinteren rechten Radbremse 114 verbunden, während die Steuereinheit 106 mit der vorderen rechten Radbremse 110 und der hinteren linken Radbremse 112 verbunden ist.

Zur Energieversorgung sowohl der Steuereinheiten 104 und 106 als auch der Radbremsen 108, 110, 112 und 114, weist das Bremssystem 100 zwei Energiequellen 116 und 118 auf, beispielsweise in Form von entsprechenden Batterien. Gleichermaßen kann jedoch eine solche Energiequelle auch repräsentativ für ein Bordnetz des Fahrzeugs interpretiert werden. Dabei ist die erste Batterie 116 ausschließlich mit der Steuereinheit 106, sowie mit der vorderen rechten Radbremse 110 und der hinteren linken Radbremse 112 direkt verbunden. Die zweite Batterie 118 ist wiederum mit der Steuereinheit 104, sowie mit der vorderen linken Radbremse 108 und der hinteren rechten Radbremse 114 direkt verbunden. Eine direkte Verbindung beispielsweise der hinteren rechten Radbremse 114 mit der ersten Batterie 116 besteht nicht. Die Radbremsen 108, 110, 112 und 114 sind dabei jeweils als elektromechanische Radbremsen ausgebildet, und weisen jeweils eine eigenständige Steuereinheit 120, 122, 124 und 126 auf, die ausgehend von empfangenen Steuerbefehlen das Verhalten der jeweiligen Radbremse regeln.

Es ergeben sich demnach zwei unabhängige Bremskreise, die jeweils eine Energiequelle eine Steuereinheit und zwei in diesem Fall diagonal verteilte Radbremsen umfassen.

Für hochautomatisierte Fahren in einem derartigen Brake-by-Wire Bremssystem ist es dabei erforderlich, dass bei jeder Art von Ausfällen das vom Fahrer kontrollierte Bremsen weiterhin möglich ist. Das gilt insbesondere auch für Fehler in der Elektronik, beispielsweise hinsichtlich der Energieversorgung durch die Energiequellen. Voraussetzung hierfür ist ein redundantes Konzept zur Energieversorgung im Fahrzeug, bei dem grundsätzlich ein Verbinden der beiden Bordnetze des Fahrzeuges zu vermeiden ist. Andernfalls besteht die Gefahr, dass bei einem Kurzschluss gleich beide Bordnetzes zeitgleich lahmgelegt werden. Ein Bremsen wäre dann nicht mehr möglich.

Dieses grundlegende Konzept wird in dem in Figur 1 dargestellten Bremssystem 100 durch die separaten Bremskreise mit ihrer unabhängigen Energieversorgung und Steuerung realisiert. So wäre bei einem Ausfall einer der Energiequellen oder einer der Steuereinheiten stets noch ein weiterer Bremskreis mit zwei Radbremsen verfügbar, über den eine Bremsanforderung umgesetzt werden könnte. Allerdings wird bei einer Reduzierung des wirksamen Bremssystems auf lediglich zwei funktionierende Radbremsen die verfügbare Verzögerungsleistung unter Umständen so weit reduziert, dass sie erforderliche Sicherheitsanforderungen nicht mehr erfüllt.

Folglich besteht ein Bedarf an einem Konzept, mit dem auch bei Ausfall einer der Energiequellen oder einer der Steuereinheiten weiterhin eine hinreichend große Verzögerungsleistung verfügbar bleibt, sodass ein sicheres Verzögern des Fahrzeugs gewährleistet ist.

Diese Aufgabe wird mit dem Bremssystem gemäß Anspruch 1 gelöst. Vorteilhafte Ausgestaltungen sind Gegenstand der abhängigen Ansprüche.

Bei einem Bremssystem mit wenigstens zwei Energiequellen und wenigstens zwei elektromechanischen Radbremsen, wobei eine erste Radbremse ausschließlich mit einer ersten der Energiequellen direkt verbunden und mit einer zweiten der Energiequellen nicht direkt verbunden ist, und eine zweite Radbremse mit der zweiten Energiequelle direkt verbunden und mit der ersten Energiequelle nicht direkt verbunden ist, ist erfindungsgemäß vorgesehen, dass die Radbremsen jeweils dazu ausgebildet sind, bei Ausfall der Energiequelle der jeweils anderen Radbremse die andere Radbremse mit Energie aus der verbleibenden Energiequelle zu versorgen.

Unter einer "direkten Verbindung" zwischen Radbremse und Energiequelle ist dabei eine Verbindung zu verstehen, bei der keine weiteren Baugruppen oder Vorrichtungen zwischen die Radbremse und der Energiequelle geschaltet sind. Folglich besteht bereits dann keine "direkte Verbindung" im Sinne der Erfindung mehr, wenn sich in der Verbindung wenigstens eine Vorrichtung, wie beispielsweise eine weitere Radbremse, zwischen der betrachteten Radbremse und der zugeordneten Energiequelle befindet. Unter einer "Energiequelle" kann dabei beispielsweise eine Batterie oder ein Bordnetz des Fahrzeugs verstanden werden. Durch die beschriebene Auslegung des Bremssystem kann ein Ausfall einer der Energiequellen insoweit kompensiert werden, dass die von dem Ausfall direkt betroffene Radbremse auch weiterhin mit Energie aus der noch verbleibenden Energiequelle versorgt wird, sodass zumindest die Verzögerungsleistung der mit der nicht betroffenen Radbremse verbundenen Radbremse erhalten bleibt. Dabei wird die Übertragung von Energie zwischen den Radbremsen vorzugsweise durch die Steuereinheiten der Radbremsen gesteuert. Dabei können die Steuereinheiten der Radbremsen insbesondere auch dazu ausgebildet sein, bei erkanntem Ausfall einer Energiequelle eine entsprechende Warnmeldung auszugeben, die dem Fahrzeugführer beispielsweise optisch oder akustisch anzeigt, dass eine Fehlfunktion des Bremssystems vorliegt.

Um eine sichere Übertragung von Energie zwischen den Radbremsen zu gewährleisten ist gemäß der Erfindung vorgesehen, dass in den Radbremsen jeweils eine Leistungsregeleinheit vorgesehen ist, die dazu ausgebildet ist, bei Ausfall der nicht mit der Radbremse verbundenen Energiequelle die Übertragung von Energie von der verbliebenen Energiequelle an die jeweils andere Radbremse zu steuern. Die Leistungsregeleinheit kann dabei insbesondere als Teil der Steuereinheit einer Radbremse ausgebildet sein und unter anderem dazu dienen, bei erkanntem Ausfall einer Radbremse die entsprechende Radbremse von der ausgefallenen Energiequelle zu trennen, sodass beispielsweise ein infolge eines Defekts entstandener Kurzschluss keine negativen Auswirkungen auf die übrigen Radbremsen hat. Dabei ist vorgesehen, dass eine Leistungsregeleinheit nur dann in einer Steuereinheit ausgebildet ist, wenn die Steuereinheit mit einer weiteren Steuereinheit einer anderen Radbremse zur Übertragung von Energie verbunden ist.

Eine möglichst effiziente Energieversorgung einer durch einen Ausfall einer Energiequelle betroffenen Radbremse durch die nicht betroffene Radbremse wird nach einer weiteren Ausführungsform dadurch gewährleistet, dass die erste Radbremse und die zweite Radbremse zur Übertragung von Energie aus den jeweiligen Energiequellen über wenigstens eine Verbindungsleitung direkt miteinander verbunden sind. Die Verbindungsleitung wird dabei bevorzugt ausschließlich dann belastet, wenn eine der Energiequellen ausgefallen ist. Ferner kann dabei vorgesehen sein, dass die Leistungsregeleinheit und/oder die Steuereinheit einer Radbremse zyklisch die Verfügbarkeit der direkten Verbindungsleitung überprüft und gegebenenfalls eine Warnung ausgibt, wenn die Verfügbarkeit nicht mehr gegeben ist.

Dabei kann die Sicherheit einer solchen Anordnung nach einer weiteren Ausführungsform weiter gesteigert werden, indem die erste Radbremse und die zweite Radbremse zur Übertragung von Energie aus den jeweiligen Energiequellen über zwei Verbindungsleitungen direkt miteinander verbunden sind, wobei eine erste der Verbindungsleitungen ausschließlich dazu ausgebildet ist, Energie von der ersten Radbremse an die zweite Radbremse zu übertragen und wobei eine zweite der Verbindungsleitungen ausschließlich dazu ausgebildet ist, Energie von der zweiten Radbremse an die erste Radbremse zu übertragen. Es handelt sich demnach bei den Verbindungsleitungen jeweils um unidirektionale Verbindungen, die jeweils eine Energieübertragung nur in eine einzelne Richtung zulassen. Auf diese Weise beeinflussen sich die Energieübertragungspfade nicht gegenseitig, sodass eine erhöhte Sicherheit erreicht wird.

Gemäß der Erfindung ist ferner vorgesehen, dass die Radbremsen jeweils eine erste Schnittstelle zur Verbindung mit der jeweiligen Energiequelle und eine zweite Schnittstelle zur Verbindung mit der jeweils anderen Radbremse aufweisen. Die Schnittstellen können dabei insbesondere jeweils als Teil der Steuereinheiten der Radbremsen ausgebildet sein. Dabei sind die Schnittstellen erfindungsgemäß so ausgebildet, dass sie sich nicht gegenseitig beeinflussen, insbesondere als separate Steckverbindungen. Die Schnittstellen sind dabei bevorzugt so ausgebildet, dass eine bestehende Verbindung mit einer Energiequelle oder der jeweils anderen Radbremse gezielt abgeschaltet werden kann. So kann insbesondere bei einem Defekt der Energieversorgung oder der anderen Radbremse verhindert werden, dass dieser Defekt direkte Auswirkungen auf die betrachtete Radbremse hat. So könnte im Fehlerfall ein Defekt der jeweils anderen Radbremse oder der Energiequelle als Folgefehler auch zu einem Ausfall der betrachteten Radbremse führen.

Um eine galvanische Trennung der Radbremsen von den Energiequellen und auch zwischen den Radbremsen untereinander zu verbessern, ist nach einer weiteren Ausführungsform vorgesehen, dass die Radbremsen über je einen Gleichspannungswandler je Schnittstelle mit der Energiequelle und/oder der jeweils anderen Radbremse verbunden sind. Folglich ist vorzugsweise jeweils ein Gleichspannungswandler an den Schnittstellen zwischen Energiequelle und Radbremse und zwischen Radbremse und Radbremse vorhanden.

Ferner kann eine sichere und gezielte Kopplung bzw. Entkopplung zwischen Radbremsen und Energiequellen erfindungsgemäß dadurch erreicht werden, dass die Schnittstellen zur Energiequelle und/oder der jeweils anderen Radbremse über Schalteinrichtungen trennbar mit der Radbremse verbunden sind. So kann beispielsweise gezielt über die Schnittstelle die Verbindung zwischen einer Radbremse und einer fehlerhaften Energiequelle unterbrochen werden, sodass das übrige Bremssystem von der fehlerhaften Energiequelle unbeeinflusst ist. Die Steuerung der Schalteinrichtungen kann dabei durch die Leistungsregeleinheit oder die Steuereinheit einer Radbremse erfolgen. Die Schalteinrichtungen können dabei insbesondere als Sicherheitsschalter ausgebildet sein.

Insbesondere kann auch vorgesehen sein, dass die Schnittstelle zwischen Radbremse und Energiequelle eine Schalteinrichtung aufweist, während die Schnittstelle zu der jeweils anderen Radbremse einen Gleichspannungswandler aufweist, oder umgekehrt.

Nach einer weiteren Ausführungsform ist ferner vorgesehen, dass das Bremssystem zwei Bremskreise mit jeweils wenigstens zwei Radbremsen je Bremskreis aufweist, wobei wenigstens eine Radbremse eines ersten der Bremskreise mit wenigstens einer Radbremse eines zweiten der Bremskreise zur Versorgung mit Energie bei Ausfall einer der Energiequellen direkt verbunden ist. Dabei kann am Beispiel eines Fahrzeugs mit zwei Achsen insbesondere vorgesehen sein, dass die direkte Verbindung zwischen den Radbremsen einer Vorderachse des Fahrzeugs, zwischen den Radbremsen einer Hinterachse des Fahrzeugs, zwischen den Radbremsen jeweils einer Seite des Fahrzeugs, oder zwischen diagonal gegenüberliegenden Radbremsen des Fahrzeugs besteht.

In der zuvor beschriebenen Konfiguration mit zwei Bremskreisen ist nach einer weiteren Ausführungsform vorgesehen, dass die Bremskreise jeweils eine zentrale Steuereinheit zur Bereitstellung von Steuerinformationen für die Radbremsen aufweisen, wobei jeweils wenigstens eine der Radbremsen eines Bremskreises dazu ausgebildet ist, bei Ausfall der Steuereinheit des Bremskreises Steuerinformationen von einer Radbremse des anderen Bremskreises zu empfangen und zu verarbeiten. Hierzu kann zwischen den Steuereinheiten der Radbremsen ein separates Bussystem ausgebildet sein, dass von der direkten Verbindung der Radbremsen zum Austausch von Energie getrennt ist. Auf diese Weise können auch bei Ausfall einer der Steuereinheiten eines Bremskreises weiterhin Bremsregelfunktionen durchgeführt werden, die auf entsprechende Steuersignale der Steuereinheit angewiesen sind, wie beispielsweise ABS-Regelungen.

Die Betriebssicherheit bei der Übertragung von Energie zwischen den Radbremsen kann nach einer weiteren Ausführungsform dadurch verbessert werden, dass das Bremssystem wenigstens eine Energie-Übertragungseinheit aufweist, die mit der ersten und der zweiten Radbremse jeweils direkt verbunden und dazu ausgebildet ist, bei Ausfall einer der Energiequellen die Energieversorgung der betroffenen Radbremse durch die Energiequelle der jeweils andere Radbremse zu steuern. Die Energie-Übertragungseinheit ist demnach bevorzugt in der direkten Verbindung zwischen den Radbremsen angeordnet. Durch die Verwendung einer gesonderten Einheit zur Steuerung der Energieübertragung zwischen den Radbremsen kann eine Leistungsregeleinheit in den Radbremsen, die eigentlich für die Steuerung der Energieübertragung zwischen den Radbremsen vorgesehen sein kann, entweder einfacher gestaltet werden, oder sogar vollständig entfallen. Dabei wird bevorzugt die Energie-Übertragungseinheit ausschließlich durch die Radbremsen mit Spannung zum Betrieb der Energie-Übertragungseinheit versorgt, sodass keine direkte Verbindung der Energie-Übertragungseinheit mit einem der Bordnetze des Fahrzeugs notwendig ist. Vorzugsweise ist dabei die Energie-Übertragungseinheit so ausgestaltet, dass sie in einem energiesparenden Standby-Zustand verbleibt, solange kein Ausfall einer der Energiequellen vorliegt. Gleichermaßen ist die Energie-Übertragungseinheit vorzugsweise so ausgelegt, dass sie auch bei einer Unterspannung beider Energiequellen in dem Standby-Zustand verbleibt, um die Bordnetze nicht zusätzlich zu belasten.

Dabei ist nach einer weiteren Ausführungsform vorgesehen, dass die Energie-Übertragungseinheit über eine erste Schnittstelle mit der ersten Radbremse und über eine zweite Schnittstelle mit der zweiten Radbremse verbunden ist, wobei die Energie-Übertragungseinheit dazu ausgebildet ist, einen Spannungsabfall an einer der Schnittstellen zu erkennen und in Reaktion auf einen erkannten Spannungsabfall die Spannung an der entsprechenden Schnittstelle wenigstens bei einer Mindestspannung zu halten.

Dabei ist die Energie-Übertragungseinheit bevorzugt so ausgestaltet, dass zur Steuerung der an den Schnittstellen anliegenden Spannungen durch die Energie-Übertragungseinheit ausschließlich auf Grundlage der von den Radbremsen an den Schnittstellen bereitgestellten Spannung erfolgt. Weitere Steuersignale werden vorzugsweise nicht benötigt. Hierzu können beispielsweise Pulsweitenmodulations-Generatoren (PWM) eingesetzt werden, die innerhalb der Energie-Übertragungseinheit eine an einer Schnittstelle bereitgestellte Spannung allein auf Grundlage der an den Schnittstellen anliegenden Spannungen und aus den Spannungen abgeleiteten Stromstärken regeln.

Die Sicherheit des Bremssystems wird dabei nach einer weiteren Ausführungsform dadurch verbessert, dass die erste Schnittstelle räumlich von der zweiten Schnittstelle getrennt ist, sodass sich die Schnittstellen insbesondere bei einem Defekt einer der Schnittstellen, insbesondere bei unkontrollierbaren mechanischen Schäden, nicht gegenseitig beeinflussen. Insbesondere kann es sich bei den beiden Schnittstellen um räumlich getrennte Steckverbindungen handeln. Als Defekte bzw. mechanische Schäden sind dabei insbesondere solche Fehlfunktionen gemeint, infolge derer eigentlich getrennte Kontakte einen ungewollten elektrischen Kontakt aufbauen. Beispielsweise kann ein solches Verhalten infolge eines Schmelzens oder Verbrennens eines der Kontakte auftreten.

Abgesehen von den Anschlüssen der Energie-Übertragungseinheit zur Bereitstellung einer Spannung von bzw. zu den Radbremsen, weist die Energie-Übertragungseinheit bevorzugt ferner zwei Masseanschlüsse auf, die mit den jeweiligen Steckverbindungen zu den Radbremsen zusammenfallen können.

Nach einer weiteren Ausführungsform ist ferner vorgesehen, dass die Energie-Übertragungseinheit einen ersten Stromkreis zur Bereitstellung einer Spannung an der ersten Schnittstelle und einen zweiten Stromkreis zur Bereitstellung einer Spannung an der zweiten Schnittstelle aufweist, wobei der erste Stromkreis galvanisch von dem zweiten Stromkreis getrennt ist. Auf diese Weise kann vermieden werden, dass beispielsweise ein Kurzschluss einer fehlerhaften Energiequelle Auswirkungen auf den nicht direkt mit der fehlerhaften Energiequelle verbundenen Bremskreis hat.

Dabei ist nach einer weiteren Ausführungsform vorgesehen, dass die Stromkreise bei Ausfall einer der Energiequellen jeweils aus dem jeweils anderen Stromkreis mit einer Spannung versorgt werden. Hierzu kann insbesondere in der Energie-Übertragungseinheit ein Transformator, vorzugsweise mit einem Ferritkern, vorgesehen sein, über den eine an der ersten Schnittstelle und mithin in dem ersten Stromkreis anliegende Spannung auf den zweiten Stromkreis übertragen werden kann. Die auf Grundlage der so bereitgestellte Spannung an der Schnittstelle des zweiten Stromkreises bereitgestellte Spannung kann dann bevorzugt durch einen in dem zweiten Stromkreis angeordneten PWM-Generator der Energie-Übertragungseinheit auf Grundlage der in den Stromkreisen herrschenden Spannungen und Ströme gesteuert werden.

Um eine Überlastung einer der Energiequellen bei Ausfall der anderen Energiequelle zu vermeiden, ist nach einer weiteren Ausführungsform vorgesehen, dass die Energie-Übertragungseinheit dazu ausgebildet ist bei Ausfall einer der Energiequellen die von dem Ausfall betroffene Radbremse maximal mit einer definierten Leistung mit Energie zu versorgen. Die Limitierung wird vorzugsweise durch einen entsprechend eingerichteten PWM-Generator der Energie-Übertragungseinheit umgesetzt. Dabei wird die übertragene Leistung bevorzugt anhand des entsprechenden elektrischen Stroms geregelt, was die Messung der übertragenen Leistung vereinfacht.

Im Folgenden werden bevorzugte Ausgestaltungen der Erfindung anhand der Zeichnungen näher erläutert. Dabei zeigen:
- Figur 2: eine schematische Darstellung eines beispielhaften Bremssystems mit vier Radbremsen, von denen zwei zur gegenseitigen Energieversorgung miteinander verbunden sind,
- Figur 3: schematische Darstellungen beispielhafter Verschaltungen von Energiequellen und Steuereinheiten der Radbremsen,
- Figur 4: schematische Darstellungen weiterer beispielhafter Verschaltungen von Energiequellen und Steuereinheiten der Radbremsen,
- Figur 5: eine schematische Darstellung einer beispielhaften Verschaltung von Energiequellen, Steuereinheiten der Radbremsen und einer Energieübertragungs-Einheit,
- Figur 6: schematische Darstellungen von elektrischen Schaltungen beispielhafter Energieübertragungs-Einheiten, und
- Figur 7: einen schematischen Schaltplan einer Anordnung von Energiequellen, Steuereinheiten der Radbremsen und einer Energieübertragungs-Einheit.

Im Folgenden werden einander ähnliche oder identische Merkmale mit denselben Bezugszeichen gekennzeichnet.

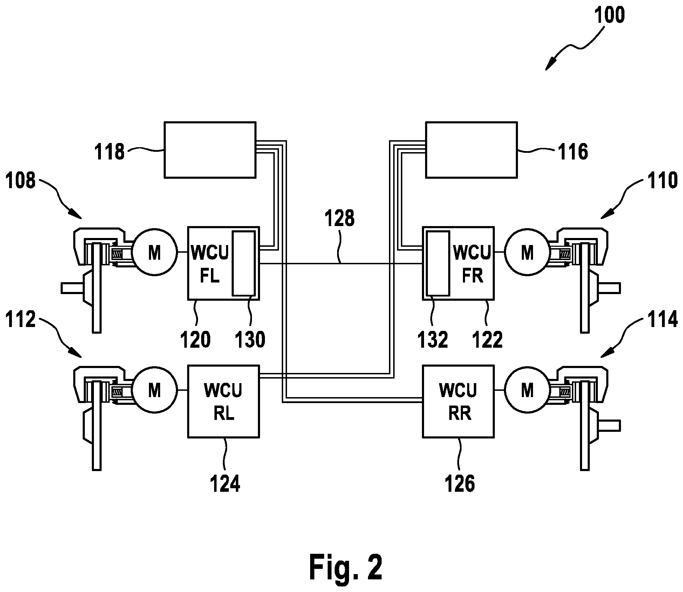

Die Figur 2 zeigt eine schematische Darstellung eines Bremssystems 100, das dem zuvor mit Bezug zu Figur 1 beschriebenen Bremssystem 100 weitgehend entspricht. Aus Gründen der Übersichtlichkeit sind in der Darstellung der Figur 2 jedoch die Pedalbetätigungseinheit 102, die Steuergeräte 104 und 106, sowie die an den Radbremsen 108, 110, 112 und 114 angeordneten Räder nicht dargestellt.

Anders als in dem in Figur 1 dargestellten Bremssystem 100, ist in dem Bremssystem 100 der Figur 2 vorgesehen, dass die vordere linke Radbremse 108 und die vordere rechte Radbremse 110 über eine Verbindungsleitung 128 so miteinander verbunden sind, dass bei Ausfall einer der Energiequellen 116 oder 118 die Energieversorgung der jeweils betroffenen Radbremse durch die nicht von dem Ausfall betroffene Radbremse bereitgestellt werden kann.

Zur Steuerung der Energieübertragung im Falle eines Ausfalls einer der Energiequellen 116 oder 118 sind in den Steuereinheiten 120 bzw. 122 der Radbremsen 108 ziehungsweise 110 jeweils Leistungsregeleinheiten 130 bzw. 132 ausgebildet. Die Leistungsrechteinheiten 130 bzw. 132 sind dabei vorzugsweise so ausgelegt, dass sie einen Ausfall einer der Energiequellen 116 oder 118 erkennen und in Reaktion darauf die Verbindung zwischen der betroffenen Radbremse und der ausgefallenen Energiequelle unterbrechen und die zum Betrieb der betroffenen Radbremse benötigte Energie von der nicht betroffenen Radbremse zu beziehen.

Die in der Figur 2 dargestellte Verbindung zwischen der vorderen linken Radbremse 108 und der vorderen rechten Radbremse 110 ist dabei lediglich ein Beispiel, wie eine zumindest teilweise Redundanz für den Fall eines Ausfalls einer der Energiequellen 116 oder 118 geschaffen werden kann. So wäre beispielsweise bei einem Ausfall der Energiequelle 116 und einer hieraus resultierenden Energieversorgung der Radbremse 110 durch die Radbremse 108 die weiterhin verfügbare Bremsleistung des Bremssystems 110 gegenüber der Bremsleistung, die bei einem Ausfall beider Radbremsen 112 und 110 verfügbar wäre, deutlich verbessert, da drei von vier Radbremsen weiterhin betrieben werden können.

Es wäre im Rahmen der Erfindung jedoch durchaus auch möglich, dass die hintere linke Bremse 112 mit der hinteren rechten Brems 114 über eine entsprechende Verbindungsleitung zum Austausch Energie verbunden wäre. Gleichermaßen könnten auch die Radbremsen einer Seite, sprich die Radbremse 108 mit der Radbremse 112, oder die Radbremse 110 mit der Radbremse 114 für einen Energieaustausch verbunden sein. Ferner wäre es auch möglich, dass mehr als 2 Radbremsen jeweils zum Austausch von Energie mit einander verbunden sind. Beispielsweise wäre es demnach auch möglich, dass neben einer Verbindung zwischen der vorderen linken Radbremse 108 unter vorderen rechten Radbremse 110 eine weitere Verbindung zwischen der hinteren linken Radbremse 112 unter hinteren rechten Radbremse 114 besteht. Allerdings ist von den beschriebenen Konzepten die Variante, bei der die vorderen Radbremsen 108 und 110 gegenseitig einen Ausfall der jeweils zugeordneten Energiequellen 116 und 118 kompensieren können, besonders vorteilhaft, da üblicherweise ein Großteil der Verzögerungsleistung bei einer Verzögerung eines Fahrzeugs durch die Radbremsen der Vorderachse aufgebracht wird.

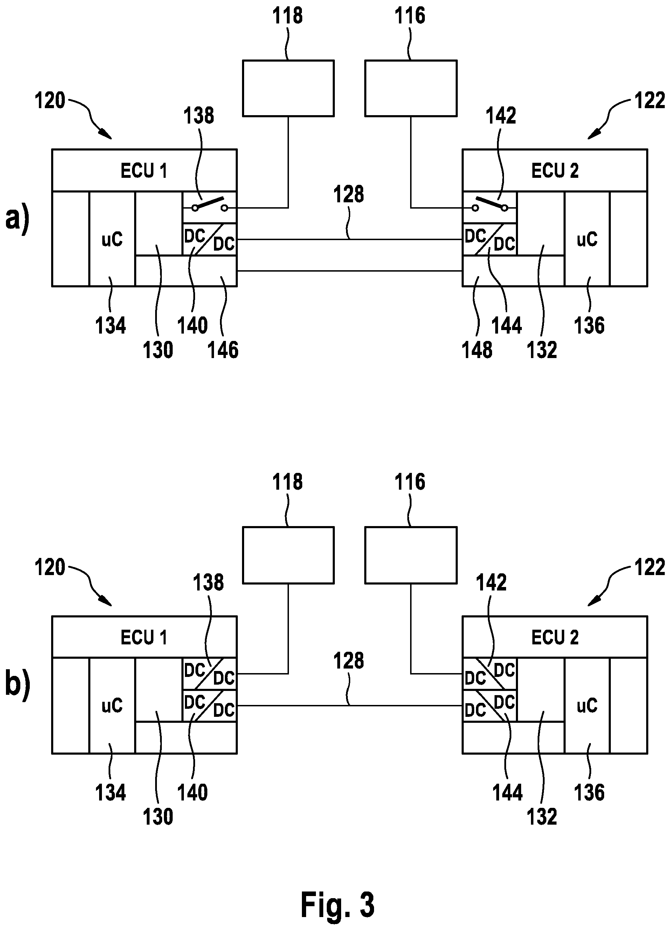

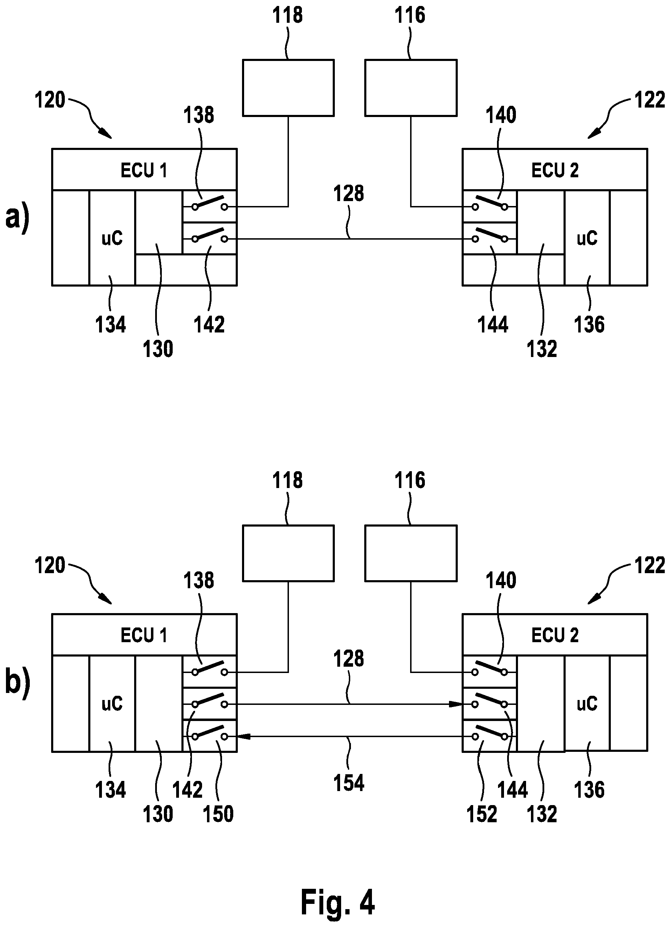

Im Folgenden werden nun mit Bezug auf die Figuren 3 und 4 unterschiedliche beispielhafte Varianten von Verschaltungen von Energiequellen und Steuereinheiten der Radbremsen anhand entsprechender schematischer Darstellungen beschrieben. Dabei wird rein exemplarisch davon ausgegangen, dass es sich bei der links abgebildeten Steuereinheit um die Steuereinheit 120 der vorderen linken Radbremse 108 und bei der rechts abgebildeten Steuereinheit um die Steuereinheit 122 der vorderen rechten Radbremse 110 handelt. Bei den beiden abgebildeten Energiequellen 116 und 118 kann sich beispielsweise um Batterien oder die Bordnetzes eines Fahrzeugs handeln, indem das zuvor dargestellte Bremssystem 100 eingesetzt wird.

Die Steuereinheiten 120 und 122 sind dabei im Wesentlichen gleich aufgebaut und beinhalten jeweils einen Mikrocontroller 134 bzw. 136, der beispielsweise zur Ansteuerung der Radbremse 108 zur Umsetzung einer Bremsanforderung ausgebildet ist. Ferner weisen die Steuereinheiten 120 und 122 jeweils eine Leistungsregeleinheit 130 bzw. 132 auf, die dazu ausgebildet ist, im Falle eines Ausfalls einer der Radbremse zugeordneten Energiequelle die Energieversorgung durch die nicht von dem Ausfall betroffene Radbremse zu steuern. Hierzu ist beispielsweise die Leistungsregeleinheit 130 der Steuereinheit 120 über eine erste Schnittstelle 138 mit der Energiequelle 118 verbunden, während über eine zweite Schnittstelle 140 eine Verbindung mit der Steuereinheit 122 der vorderen rechten Radbremse 110 besteht.

Analog hierzu weist die Steuereinheit 122 der vorderen rechten Radbremse 110 ebenfalls eine erste Schnittstelle 142 zur Verbindung mit der Energiequelle 116 und eine zweite Schnittstelle 144 zur Verbindung mit der Steuereinheit 120 auf. Weiter weisen beide Steuereinheiten 120 und 122 jeweils einen Datenbus 146 und 148 auf, über den beispielsweise Steuerinformationen zur Ansteuerung der Radbremsen ausgetauscht werden können.

In der in Figur 3 a) dargestellten Variante weisen jeweils die ersten Schnittstellen 138 und 142 der Steuereinheiten 120 und 122 als Sicherheitsschalter ausgebildete Schalteinheiten auf, sodass die Verbindung zwischen den Steuereinheiten 120, 122 und den jeweils zugeordneten Energiequellen 116 und 118 bei Ausfall einer der Energiequellen getrennt werden kann. Die jeweils zweiten Schnittstellen 140 und 144 der Steuereinheiten 120 und 122 weisen jeweils Gleichspannungswandler auf, über die eine galvanische Trennung der Steuereinheiten 120 und 122 erreicht wird.

Im Normalbetrieb des dargestellten Bremssystems 100, also der normalen Funktion der Energiequellen 116 und 118 sind dabei die Sicherheitsschalter der Schnittstellen 138 in 142 geschlossen, sodass die Steuereinheiten 120 und 122 jeweils aus den zugeordneten Energiequellen 116 und 118 mit Energie versorgt werden über die Verbindungsleitung 128 wird dabei keine Energie übertragen. Die Steuereinheiten 120 und 122 oder die zugeordneten Leistungsregeleinheiten 130 und 132 können dabei dazu ausgebildet sein, die Verfügbarkeit der Verbindungsleitung 128 zyklisch zu überprüfen und gegebenenfalls eine Fehlermeldung auszugeben, wenn die Verbindungsleitung 128 nicht funktionsfähig sein sollte.

Fällt nun beispielsweise die Energiequelle 116 aufgrund eines Kurzschlusses oder eines sonstigen Defekts aus, wird dies von der Leistungsregeleinheit 132 erkannt und der Sicherheitsschalter der Schnittstelle 142 geöffnet. Wird über die Verbindungsleitung 128 die zum Betrieb der Radbremse 110 benötigte Energie von der Radbremse 108 bzw. mittelbar von der Energiequelle 118 bezogen. Dabei ist die Regelung der Energieübertragung durch die Leistungsregeleinheit in 130 und 102 30 vorzugsweise so ausgestaltet, dass eine unterbrechungsfreie Übernahme der Energieversorgung durch die Radbremse 108 gewährleistet ist. Gleichzeitig kann durch die beschriebene Infrastruktur auch ein Überlastschutz realisiert werden. Kommt es beispielsweise an der Verbindungsleitung 128 zu einem Kurzschluss, kann auch dies anhand einer Überlasterkennung durch die Leistungsregeleinheiten 130 in 132 erkannt werden, sodass die Gleichspannungswandler der Schnittstellen 140 in 144 abgeschaltet werden, um eine Beeinflussung der Steuereinheiten 120 und 122 durch den erkannten Kurzschluss zu vermeiden.

In der in Figur 3 b) dargestellten Variante sind die Sicherheitsschalter der ersten Schnittstellen 138 und 142 der Steuereinheiten 120 und 122 durch Gleichspannungswandler ersetzt. Durch die Verwendung von Gleichspannungswandlern auf beiden Schnittstellen wird dabei die Wahrscheinlichkeit einer galvanischen Kopplung zwischen Steuereinheit 120 und Energiequelle 118 bzw. Steuereinheit 122 und Energiequelle 116 im Falle eines Fehlers weiter reduziert.

Demgegenüber sind in der in Figur 4 a) dargestellten Variante sowohl die ersten Schnittstellen 138 und 142 als auch die zweiten Schnittstellen 140 und 144 der Steuereinheiten 120 und 122 jeweils mit einem Sicherheitsschalter ausgestattet, wobei die Sicherheitsschalter vorzugsweise durch die Leistungsregeleinheit 130 und 132 angesteuert werden können. Gegenüber der Verwendung von Gleichspannungswandlern in den Schnittstellen hat die dargestellte Ausführung im Wesentlichen einen Kostenvorteil, da Sicherheitsschalter im Allgemeinen kostengünstiger herzustellen sind als bei Spannungswandler.

In der in Figur 4 b) dargestellten Variante weisen die Steuereinheiten 120 und 122 ferner jeweils eine dritte Schnittstelle 150 bzw. 152 auf, über die die Steuereinheiten 120 und 122 ebenfalls zum Austausch von Energie miteinander verbunden sind. Dabei sind in der dargestellten Ausführung sämtliche Schnittstellen der Steuereinheiten 120 und 122 jeweils mit Sicherheitsschaltern ausgestattet, über die entsprechenden Verbindungen gegebenenfalls unterbrochen werden können. Dabei ist die Verbindungsleitung 128 zwischen den jeweils zweiten Schnittstellen 140 und 144 ausschließlich dazu ausgebildet Energie von der ersten Steuereinheit 120 an die zweite Steuereinheit 122 zu übertragen, während die weitere Verbindungsleitung 154 zwischen jeweils dritten Schnittstellen 150 und 152 ausschließlich dazu ausgebildet ist, Energie von der zweiten Steuereinheit 122 an die erste Steuereinheit 120 zu übertragen. Folglich handelt es sich in dieser Variante bei den Verbindungsleitungen 128 und 154 jeweils um unidirektionale Verbindungen sodass die Richtungspfade zwischen den Steuereinheiten 120 und 122 jeweils getrennt sind.

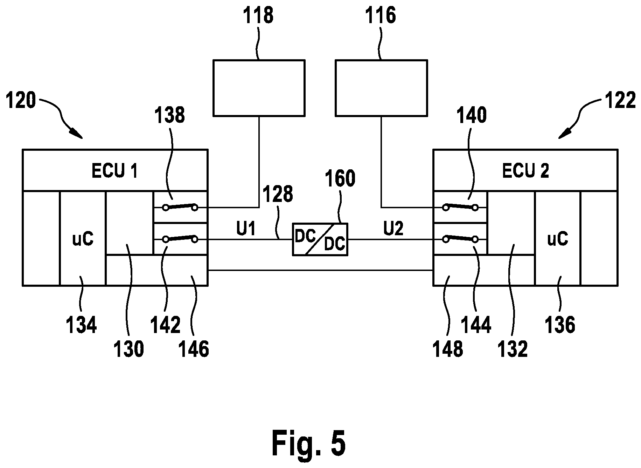

Die Figur 5 zeigt eine weitere Ausgestaltung der zuvor mit Bezug auf Figur 3 und Figur 4 beschriebenen Varianten von Verschaltungen der Steuereinheiten 120 und 122 und der Energiequellen 116 und 118. In der hier dargestellten Variante, welche weitgehend der Variante der Figur 4 a) entspricht, ist in der Verbindungsleitung 128 zwischen den jeweiligen zweiten Schnittstellen 140 und 144 der Steuereinheiten 120 und 122 eine Energie-Übertragungseinheit 160 angeordnet. Die Energie-Übertragungseinheit 160 dabei dazu ausgebildet, ausgehend von den an den Schnittstellen 142 in 144 bereitgestellten Spannungen U1 und U2 den Energieaustausch zwischen den Steuergeräten 120 und 122 bzw. den Radbremsen 108 und 110 zu steuern.

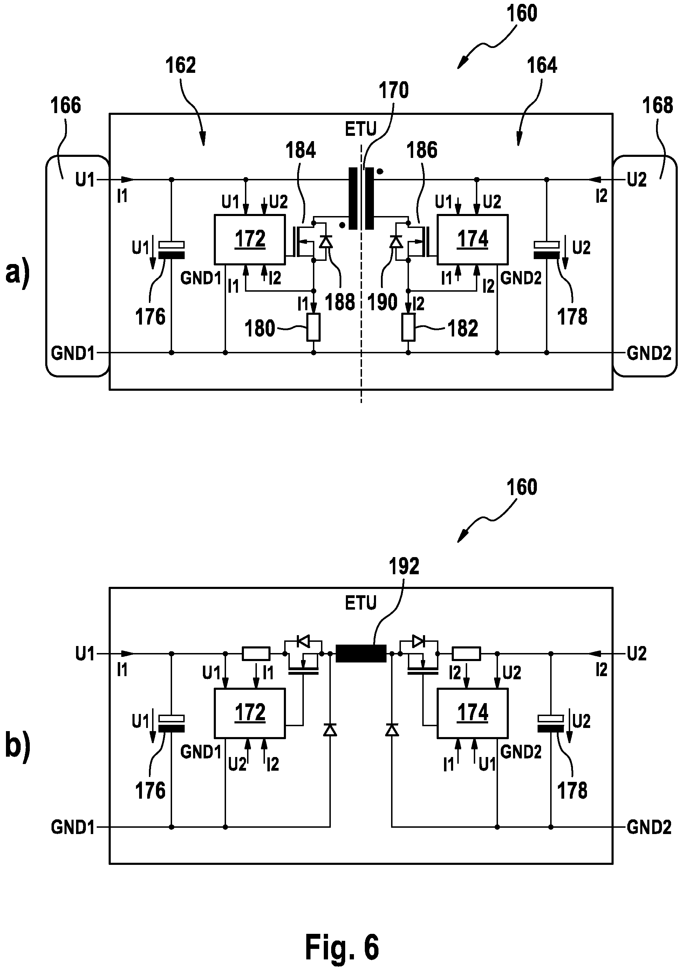

Die Funktionsweise der Energie-Übertragungseinheit 160 wird nun im Folgenden mit Bezug auf Figur 6 beschrieben, in der zwei Varianten von elektrischen Schaltungen dargestellt sind, mit denen eine Energie-Übertragungseinheit 160 im Sinne der vorliegenden Erfindung realisiert werden kann. Dabei sind die dargestellten Varianten der Energie-Übertragungseinheit vorzugsweise als eigenständige Steuereinheiten in einem separaten Gehäuse ausgestaltet, wobei die Energie-Übertragungseinheit bevorzugt lediglich vier Anschlüsse aufweist. Die Anschlüsse dienen dabei der Bereitstellung der Spannungen U1 und U2 von den zweiten Schnittstellen 142 und 144 der Steuereinheiten 120 und 122, sowie von zwei unabhängigen Masseanschlüssen (GND1, GND2). Dabei sind bevorzugt jeweils eine Spannung (U1 oder U2) und jeweils eine Masse (GND1, GND2) in einem Stecker 166 bzw. 168 zusammengefasst, wobei die resultierenden beiden Stecker 166 und 168 und die korrespondierenden Schnittstellen der Energie-Übertragungseinheit 160 vorzugsweise räumlich voneinander getrennt sind.

In der in Figur 6 a) dargestellte Variante sind innerhalb der Energie-Übertragungseinheit 160 zwei getrennte Stromkreise 162 und 164 ausgebildet, die jeweils mit einem der Stecker 166 bzw. 168 verbunden sind, wobei die Stromkreise 162 und 164 galvanisch voneinander getrennt sind. Zur Energieübertragung zwischen den Stromkreisen 162 und 164 weist die Energie-Übertragungseinheit 160 einen Transformator 170 mit einem Ferritkern auf. Ferner sind in den Stromkreisen 162 und 164 jeweils pulsweitenmodulierende Generatoren (PWM) 172 und 174 angeordnet, die jeweils dazu ausgebildet sind, in Abhängigkeit von den in den Stromkreisen 162 in 164 herrschenden Spannungen U1 und U2 und den entsprechenden Stromstärken I1 und I2 über den entsprechenden Stromkreis Energie an eben jene Radbremse bzw. deren Steuereinheit zu übertragen, deren zugeordnete Energiequelle ausgefallen ist.

Parallel zu den PWM-Generatoren 172 und 174 sind jeweils Kondensatoren 176 und 178 geschaltet, während ein Ausgang der PWM-Generatoren 172, 174 jeweils mit dem Gate-Anschluss eines Transistors 184, 186 (bspw. MOSFET) verbunden ist, der den Ferritkern-Transformator 170 mit den jeweiligen Erdungen GND1 und GND2 über nachgeschaltete Elemente 180 und 182 zur Strommessung verbindet. Ferner sind die Transistoren 184 und 186 jeweils über eine Diode 188 und 190 so verschaltet, dass Schaltspannungen des Transformators 170 gleichgerichtet werden und den Kondensatoren 176 und 178 zur Verfügung gestellt werden.

Dabei ist die Energie-Übertragungseinheit 160 aufgrund ihrer spiegelsymmetrischen Auslegung sowohl in der Lage, eine Energieübertragung von der Steuereinheit 120 zur Steuereinheit 122 zu regeln, als auch eine Energieübertragung von der Steuereinheit 122 zur Steuereinheit 120 zu regeln. Dabei ist durch die Auslegung der Energie-Übertragungseinheit grundsätzlich ausgeschlossen, dass beide PWM-Generatoren 172 und 174 gleichzeitig betrieben werden. Die Energie-Übertragungseinheit 160 ist dabei vorzugsweise so ausgelegt, dass keine weiteren Kommunikationsleitungen zur Steuerung der Energie-Übertragungseinheit 160 benötigt werden, sondern dass die Energie-Übertragungseinheit 160 ausschließlich auf Grundlage der Werte U1, U2, I1 und I2 eine Energieübertragung zwischen den Radbremsen steuern kann.

Im Folgenden wird exemplarisch das Verhalten der Energie-Übertragungseinheit 160 für unterschiedliche Eingangsspannungen U1 und U2 beschrieben.

In einem ersten Szenario liegen an beiden Eingängen der Stecker 166 und 168 jeweils Spannungen von U1 > 9 V und U2 > 9 V an. In diesem Fall werden die PWM-Generatoren 172 und 174 nicht angesteuert, sodass keine Energie übertragen wird und innerhalb der Energie-Übertragungseinheit 160 nur ein geringer Ruhe Strom fließt. Das gleiche Verhalten zeigt die Energie-Übertragungseinheit 160 auch wenn an beiden Eingängen die Spannungen U1 und U2 jeweils sehr klein sind, also beide Energiequellen 116 und 118 eine Fehlfunktion aufweisen bzw. die zugeordneten Bordnetze schwach sind.

Liegt jedoch nur an einem der Spannungseingänge U1 oder U2 eine niedrige Spannung an (bspw. U1>10 V, U2<9 V), ist der PWM-Generator 172 dazu ausgebildet, die an dem Ferritkern-Transformator 170 anliegende Spannung so zu modulieren, dass die auf dem Anschluss U2 anliegende Spannung von mindestens 9 V gehalten wird. Diese Regelung wird bevorzugt durch die Ströme I1 und I2 insofern begrenzt, dass die Spannung U2 nur so lange bei 9 V gehalten wird, wie die Stromstärke I1 < 15 A ist und die Stromstärke I2 kleiner 20 A. Die so durch den Strom begrenzte Übertragung von Energie führt zu einer Leistungsbegrenzung im Bereich von etwa 150 W bis 180 W. Auf diese Weise kann die noch funktionierende Energiequelle bzw. das entsprechende Bordnetz vor einer Überlastung geschützt werden.

Das zuvor beschriebene Verhalten funktioniert spiegelbildlich, wenn beispielsweise die Spannung U1 kleiner 9 V und Spannung U2 größer 10 V ist.

Die Figur 6 b) zeigt eine hierzu alternative Ausgestaltung einer Energie-Übertragungseinheit 160, bei der Anstelle eines Ferritkern-Transformators eine Induktivität 192 in Reihe geschaltet ist, sodass keine galvanische Trennung zwischen den Stromkreisen 162 und 164 mehr besteht. Auch hier wird bei Spannungsabfall an einem der Eingänge U1 oder U2 durch die entsprechenden PWM-Generatoren 172 oder 174 an den betroffenen Ausgängen eine zum Betrieb der verbundenen Radbremse benötigte Energie bereitgestellt.

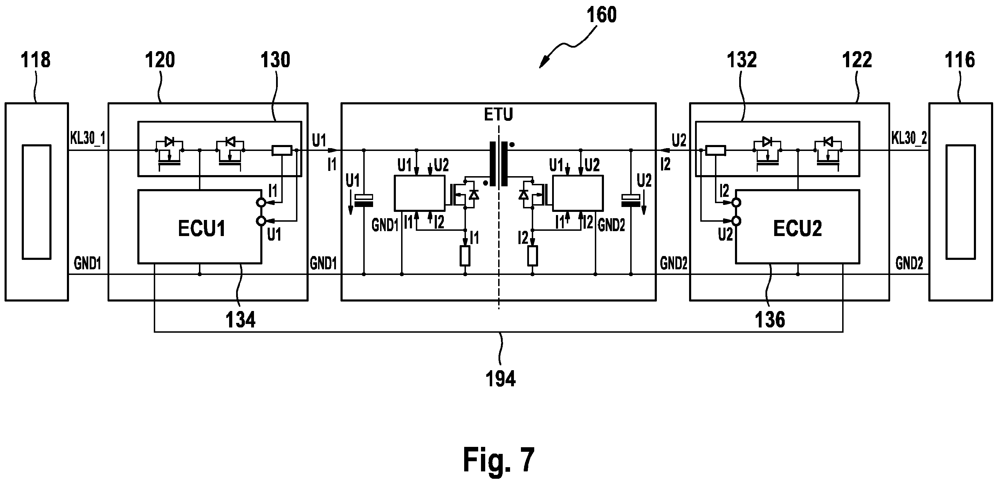

Die Figur 7 zeigt einen schematischen Schaltplan einer Anordnung von Energiequellen 118 und 116, Steuereinheiten 120 und 122 der Radbremsen 108 und 110 und einer Energie-Übertragungseinheit 160, die zwischen die Steuereinheiten 120 und 122 geschaltet ist. Dabei ist in jeder der Steuereinheiten jeweils eine Strombegrenzungseinheit 130 bzw. 132 vorgesehen, die im Falle eines Fehlers oder Ausfalls der jeweiligen Energiequelle 116 oder 118 den Stromfluss zwischen den Steuereinheiten 120 und 122 steuert. Dabei sind die Steuereinheiten 120 und 122 dazu ausgebildet, über einen Datenbus 194 Informationen auszutauschen, um beispielsweise erkannte Fehlerzustände zu plausibilisieren, und entsprechend darauf zu reagieren, indem unter Anderem Verbindungen zu den Energiequellen 116 oder 118 unterbrochen und die Energieversorgung durch die ECU Powermanagements 132 und 132 zur Energie-Übertragungseinheit 160 abgeschaltet wird.

Die beschriebene Infrastruktur mit einer in dem Energieübertragungspfad zwischen den Radbremsen angeordneten Energie-Übertragungseinheit 160 kann dabei grundsätzlich bei jeder der zuvor mit Bezug zu Figur 2 beschriebenen Varianten einer Verbindung zwischen Radbremsen vorgesehen sein. So kann es insbesondere auch vorgesehen sein, dass die Energie-Übertragungseinheit 160 zwischen den Radbremsen 112 und 114 der Hinterachse eines Fahrzeugs angeordnet ist, oder dass sowohl zwischen den Radbremsen 108 und 110 der Vorderachse, als auch zwischen den Radbremsen 112 und 114 der Hinterachse eines Fahrzeugs jeweils eine Energie-Übertragungseinheit 160 in dem Energieübertragungspfad angeordnet ist.

## Patentansprüche

1. Bremssystem (100) mit wenigstens zwei Energiequellen (116, 118) und wenigstens zwei elektromechanischen Radbremsen (108, 110, 112, 114), wobei eine erste Radbremse (108) ausschließlich mit einer ersten der Energiequellen (118) direkt verbunden und mit einer zweiten der Energiequellen (116) nicht direkt verbunden ist, und eine zweite Radbremse (110) mit der zweiten Energiequelle (116) direkt verbunden und mit der ersten Energiequelle (118) nicht direkt verbunden ist,
wobei die Radbremsen (108, 110, 112, 114) jeweils dazu ausgebildet sind, bei Ausfall der Energiequelle (116, 118) der jeweils anderen Radbremse (108, 110, 112, 114) die andere Radbremse (108, 110, 112, 114) mit Energie aus der verbleibenden Energiequelle (116, 118) zu versorgen, wobei in den Radbremsen (108, 110, 112, 114) jeweils eine Leistungsregeleinheit (130, 132) vorgesehen ist, die dazu ausgebildet ist, bei Ausfall der nicht mit der Radbremse (108, 110, 112, 114) verbundenen Energiequelle (116, 118) die Übertragung von Energie von der verbliebenen Energiequelle (116, 118) an die jeweils andere Radbremse (108, 110, 112, 114) zu steuern, wobei die Radbremsen (108, 110, 112, 114) jeweils eine erste Schnittstelle (138, 140) zur Verbindung mit der jeweiligen Energiequelle (116, 118) und eine zweite Schnittstelle (142, 144) zur Verbindung mit der jeweils anderen Radbremse (108, 110, 112, 114) aufweisen,
und wobei die Schnittstellen (138, 140, 142, 144) zur Energiequelle (116, 118) und der jeweils anderen Radbremse (108, 110, 112, 114) über Schalteinrichtungen trennbar mit der Radbremse (108, 110, 112, 114) verbunden sind,
**dadurch gekennzeichnet, dass**
die Schnittstellen so ausgebildet sind, dass sie sich nicht gegenseitig beeinflussen, insbesondere als separate Steckverbindungen.

2. Bremssystem (100) nach Anspruch 1, **dadurch gekennzeichnet, dass** die erste Radbremse (108) und die zweite Radbremse (110) zur Übertragung von Energie aus den jeweiligen Energiequellen (116, 118) über wenigstens eine Verbindungsleitung (128) direkt miteinander verbunden sind.

3. Bremssystem (100) nach einem der vorherigen Ansprüche, **dadurch gekennzeichnet, dass** die erste Radbremse (108) und die zweite Radbremse (110) zur Übertragung von Energie aus den jeweiligen Energiequellen (116, 118) über zwei Verbindungsleitungen (128, 154) direkt miteinander verbunden sind, wobei eine erste der Verbindungsleitungen (128) ausschließlich dazu ausgebildet ist, Energie von der ersten Radbremse (108) an die zweite Radbremse (110) zu übertragen und wobei eine zweite der Verbindungsleitungen (154) ausschließlich dazu ausgebildet ist, Energie von der zweiten Radbremse (110) an die erste Radbremse (108) zu übertragen.

4. Bremssystem (100) nach Anspruch 1, **dadurch gekennzeichnet, dass** die Radbremsen (108, 110, 112, 114) über je einen Gleichspannungswandler je Schnittstelle (138, 140, 142, 144) mit der Energiequelle (116, 118) und/oder der jeweils anderen Radbremse (108, 110, 112, 114) verbunden sind.

5. Bremssystem (100) nach einem der vorherigen Ansprüche, **dadurch gekennzeichnet, dass** das Bremssystem (100) zwei Bremskreise mit jeweils wenigstens zwei Radbremsen (108, 110, 112, 114) je Bremskreis aufweist, wobei wenigstens eine Radbremse (108, 110, 112, 114) eines ersten der Bremskreise mit wenigstens einer Radbremse (108, 110, 112, 114) eines zweiten der Bremskreise zur Versorgung mit Energie bei Ausfall einer der Energiequellen (116, 118) direkt verbunden ist.

6. Bremssystem (100) nach Anspruch 5, **dadurch gekennzeichnet, dass** die Bremskreise jeweils eine zentrale Steuereinheit (104, 106) zur Bereitstellung von Steuerinformationen für die Radbremsen (108, 110, 112, 114) aufweisen, wobei jeweils wenigstens eine der Radbremsen (108, 110, 112, 114) eines Bremskreises dazu ausgebildet ist, bei Ausfall der Steuereinheit (104, 106) des Bremskreises Steuerinformationen von einer Radbremse (108, 110, 112, 114) des anderen Bremskreises zu empfangen und zu verarbeiten.

7. Bremssystem (100) nach einem der vorherigen Ansprüche, **dadurch gekennzeichnet, dass** das Bremssystem (100) wenigstens eine Energie-Übertragungseinheit (160) aufweist, die mit der ersten (108) und der zweiten Radbremse (110) jeweils direkt verbunden und dazu ausgebildet ist, bei Ausfall einer der Energiequellen (116, 118) die Energieversorgung der betroffenen Radbremse (108, 110, 112, 114) durch die Energiequelle (116, 118) der jeweils andere Radbremse (108, 110, 112, 114) zu steuern.

8. Bremssystem (100) nach Anspruch 7, **dadurch gekennzeichnet, dass** die Energie-Übertragungseinheit (160) über eine erste Schnittstelle (166) mit der ersten Radbremse (108) und über eine zweite Schnittstelle (168) mit der zweiten Radbremse (110) verbunden ist, wobei die Energie-Übertragungseinheit (160) dazu ausgebildet ist, einen Spannungsabfall an einer der Schnittstellen (166, 168) zu erkennen und in Reaktion auf einen erkannten Spannungsabfall die Spannung an der entsprechenden Schnittstelle (166, 168) wenigstens bei einer Mindestspannung zu halten.

9. Bremssystem (100) nach Anspruch 8, **dadurch gekennzeichnet, dass** die erste Schnittstelle (166) räumlich von der zweiten Schnittstelle (168) getrennt ist.

10. Bremssystem (100) nach Anspruch 8 oder 9, **dadurch gekennzeichnet, dass** die Energie-Übertragungseinheit (160) einen ersten Stromkreis (162) zur Bereitstellung einer Spannung an der ersten Schnittstelle (166) und einen zweiten Stromkreis (164) zur Bereitstellung einer Spannung an der zweiten Schnittstelle (168) aufweist, wobei der erste Stromkreis (162) galvanisch von dem zweiten Stromkreis (164) getrennt ist.

11. Bremssystem (100) nach Anspruch 10, **dadurch gekennzeichnet, dass** die Stromkreise (162, 164) bei Ausfall einer der Energiequellen (116, 118) jeweils aus dem jeweils anderen Stromkreis (162, 164) mit einer Spannung versorgt werden.

12. Bremssystem (100) nach einem der Ansprüche 7 bis 11, **dadurch gekennzeichnet, dass** die Energie-Übertragungseinheit (160) dazu ausgebildet ist bei Ausfall einer der Energiequellen (116, 118) die von dem Ausfall betroffene Radbremse (108, 110, 112, 114) maximal mit einer definierten Leistung mit Energie zu versorgen.

## Claims

1. A braking system (100) having at least two energy sources (116, 118) and having at least two electromechanical wheel brakes (108, 110, 112, 114), wherein a first wheel brake (108) is directly connected exclusively to a first of the energy sources (118) and is not directly connected to a second of the energy sources (116), and a second wheel brake (110) is directly connected to the second energy source (116) and is not directly connected to the first energy source (118),
wherein the wheel brakes (108, 110, 112, 114), in the event of failure of the energy source (116, 118) of the respective other wheel brake (108, 110, 112, 114), are each configured to supply the other wheel brake (108, 110, 112, 114) with energy from the remaining energy source (116, 118), wherein a power control unit (130, 132) is provided in each of the wheel brakes (108, 110, 112, 114), which, in the event of failure of the energy source (116, 118) not connected to the wheel brake (108, 110, 112, 114), is configured to control the transmission of energy from the remaining energy source (116, 118) to the respective other wheel brake (108, 110, 112, 114), wherein the wheel brakes (108, 110, 112, 114) each have a first interface (138, 140) for connection to the respective energy source (116, 118) and a second interface (142, 144) for connection to the respective other wheel brake (108, 110, 112, 114),
and wherein the interfaces (138, 140, 142, 144) with the energy source (116, 118) and with the respective other wheel brake (108, 110, 112, 114) are separably connected to the wheel brake (108, 110, 112, 114) via switching devices, **characterised in that**
the interfaces are configured such that they do not influence one another, in particular are configured as separate plug-type connections.

2. The braking system (100) as claimed in claim 1, **characterised in that** the first wheel brake (108) and the second wheel brake (110) are directly connected to one another via at least one connection line (128) for the transmission of energy from the respective energy sources (116, 118).

3. The braking system (100) as claimed in any one of the preceding claims, **characterised in that** the first wheel brake (108) and the second wheel brake (110) are directly connected to one another via two connection lines (128, 154) for the transmission of energy from the respective energy sources (116, 118), wherein a first of the connection lines (128) is exclusively configured to transmit energy from the first wheel brake (108) to the second wheel brake (110) and wherein a second of the connection lines (154) is exclusively configured to transmit energy from the second wheel brake (110) to the first wheel brake (108).

4. The braking system (100) as claimed in claim 1, **characterised in that** the wheel brakes (108, 110, 112, 114) are, in each case, connected via one DC-DC voltage converter per interface (138, 140, 142, 144) to the energy source (116, 118) and/or to the respective other wheel brake (108, 110, 112, 114).

5. The braking system (100) as claimed in any one of the preceding claims, **characterised in that** the braking system (100) has two brake circuits with, in each case, at least two wheel brakes (108, 110, 112, 114) per brake circuit, wherein at least one wheel brake (108, 110, 112, 114) of a first of the brake circuits is directly connected to at least one wheel brake (108, 110, 112, 114) of a second of the brake circuits for the supply of energy in the event of failure of one of the energy sources (116, 118).

6. The braking system (100) as claimed in claim 5, **characterised in that** the brake circuits have in each case one central control unit (104, 106) for the provision of control information for the wheel brakes (108, 110, 112, 114), wherein, in the event of failure of the control unit (104, 106) of the brake circuit, in each case at least one of the wheel brakes (108, 110, 112, 114) of one brake circuit is configured to receive and process control information from a wheel brake (108, 110, 112, 114) of the other brake circuit.

7. The braking system (100) as claimed in any one of the preceding claims, **characterised in that** the braking system (100) has at least one energy transmission unit (160) which, in each case, is directly connected to the first (108) and to the second wheel brake (110) and which, in the event of failure of one of the energy sources (116, 118), is configured to control the supply of energy to the affected wheel brake (108, 110, 112, 114) by means of the energy source (116, 118) of the respective other wheel brake (108, 110, 112, 114).

8. The braking system (100) as claimed in claim 7, **characterised in that** the energy transmission unit (160) is connected via a first interface (166) to the first wheel brake (108) and via a second interface (168) to the second wheel brake (110), wherein the energy transmission unit (160) is configured to identify a voltage drop at one of the interfaces (166, 168) and, in response to an identified voltage drop, hold the voltage at the corresponding interface (166, 168) at least at a minimum voltage.

9. The braking system (100) as claimed in claim 8, **characterised in that** the first interface (166) is spatially separated from the second interface (168).

10. The braking system (100) as claimed in claim 8 or 9, **characterised in that** the energy transmission unit (160) has a first electrical circuit (162) for the provision of a voltage at the first interface (166) and a second electrical circuit (164) for provision of a voltage at the second interface (168), wherein the first electrical circuit (162) is galvanically isolated from the second electrical circuit (164).

11. The braking system (100) as claimed in claim 10, **characterised in that**, in the event of failure of one of the energy sources (116, 118), the electrical circuits (162, 164) are, in each case, supplied with a voltage from the respective other electrical circuit (162, 164).

12. The braking system (100) as claimed in any one of claims 7 to 11, **characterised in that**, in the event of failure of one of the energy sources (116, 118), the energy transmission unit (160) is configured to supply energy to the wheel brake (108, 110, 112, 114) which is affected by the failure at a defined amount of power, at most.

## Revendications

1. Système de freinage (100) avec au moins deux sources d'énergie (116, 118) et au moins deux freins de roue électromécaniques (108, 110, 112, 114), dans lequel un premier frein de roue (108) est directement relié exclusivement à une première des sources d'énergie (118) et n'est pas directement relié à une seconde des sources d'énergie (116), et un second frein de roue (110) est directement relié à la seconde source d'énergie (116) et n'est pas directement relié à la première source d'énergie (118),
dans lequel les freins de roue (108, 110, 112, 114) sont chacun conçus pour fournir à l'autre frein de roue (108, 110, 112, 114) correspondant de l'énergie provenant de la source d'énergie (116, 118) restante en cas de défaillance de la source d'énergie (116, 118) de l'autre frein de roue (108, 110, 112, 114) correspondant, dans lequel les freins de roue (108, 110, 112, 114) comprennent chacun une unité de régulation de puissance (130, 132) conçue de manière à contrôler, en cas de défaillance de la source d'énergie non reliée au frein de roue (108, 110, 112, 114), le transfert d'énergie depuis la source d'énergie (116, 118) restante vers l'autre frein de roue (108, 110, 112, 114) correspondant, dans lequel les freins de roue (108, 110, 112, 114) présentent chacun une première interface (138, 140) pour la connexion avec la source d'énergie (116, 118) correspondante et une seconde interface (142, 144) pour la connexion avec l'autre frein de roue (108, 110, 112, 114) correspondant,
et dans lequel les interfaces (138, 140, 142, 144) vers la source d'énergie (116, 118) et l'autre frein de roue (108, 110, 112, 114) correspondant sont reliées au frein de roue (108, 110, 112, 114) de manière détachable au moyen de dispositifs de commutation,
**caractérisé en ce que**
les interfaces sont conçues de manière à ne pas s'influencer mutuellement, en particulier sous forme de connecteurs séparés.

2. Système de freinage (100) selon la revendication 1, **caractérisé en ce que** le premier frein de roue (108) et le second frein de roue (110) sont directement reliés entre eux par au moins une ligne de connexion (128) pour le transfert d'énergie depuis leurs sources d'énergie (116, 118) correspondantes.

3. Système de freinage (100) selon l'une quelconque des revendications précédentes, **caractérisé en ce que** le premier frein de roue (108) et le second frein de roue (110) sont directement reliés entre eux au moyen de deux lignes de connexion (128, 154) pour le transfert d'énergie depuis leurs sources d'énergie (116, 118) correspondantes, dans lequel une première des lignes de connexion (128) est exclusivement conçue pour transférer de l'énergie du premier frein de roue (108) vers le second frein de roue (110), et dans lequel une seconde des lignes de connexion (154) est exclusivement conçue pour transférer de l'énergie du second frein de roue (110) vers le premier frein de roue (108).

4. Système de freinage (100) selon la revendication 1, **caractérisé en ce que** les freins de roue (108, 110, 112, 114) sont reliés à la source d'énergie (116, 118) et/ou à l'autre frein de roue (108, 110, 112, 114) correspondant au moyen d'un convertisseur à courant continu pour chaque interface (138, 140, 142, 144).

5. Système de freinage (100) selon l'une quelconque des revendications précédentes, **caractérisé en ce que** le système de freinage (100) présente deux circuits de freinage, chacun comprenant au moins deux freins de roue (108, 110, 112, 114) par circuit, dans lequel au moins un frein de roue (108, 110, 112, 114) d'un premier des circuits de freinage est directement relié à au moins un frein de roue (108, 110, 112, 114) d'un second des circuits de freinage afin d'assurer l'alimentation en énergie en cas de défaillance de l'une des sources d'énergie (116, 118).

6. Système de freinage (100) selon la revendication 5, **caractérisé en ce que** les circuits de freinage présentent chacun une unité de commande centrale (104, 106) pour fournir des informations de commande aux freins de roue (108, 110, 112, 114), dans lequel au moins l'un des freins de roue (108, 110, 112, 114) d'un circuit de freinage est conçu pour recevoir et traiter les informations de commande d'un frein de roue (108, 110, 112, 114) de l'autre circuit de freinage en cas de défaillance de l'unité de commande (104, 106) du circuit de freinage.

7. Système de freinage (100) selon l'une quelconque des revendications précédentes, **caractérisé en ce que** le système de freinage (100) présente au moins une unité de transmission d'énergie (160), qui est directement reliée respectivement au premier (108) et au second frein de roue (110) et qui est conçue de manière à commander, en cas de défaillance de l'une des sources d'énergie (116, 118), l'alimentation en énergie du frein de roue (108, 110, 112, 114) affecté par la source d'énergie (116, 118) de l'autre frein de roue (108, 110, 112, 114) correspondant.

8. Système de freinage (100) selon la revendication 7, **caractérisé en ce que** l'unité de transmission d'énergie (160) est reliée au premier frein de roue (108) par une première interface (166) et au second frein de roue (110) par une seconde interface (168), dans lequel l'unité de transmission d'énergie (160) est conçue de manière à détecter une chute de tension à l'une des interfaces (166, 168) et, en réponse à une chute de tension détectée, à maintenir la tension à l'interface correspondante (166, 168) au moins à une tension minimale.

9. Système de freinage (100) selon la revendication 8, **caractérisé en ce que** la première interface (166) est séparée spatialement de la seconde interface (168).

10. Système de freinage (100) selon la revendication 8 ou 9, **caractérisé en ce que** l'unité de transmission d'énergie (160) présente un premier circuit (162) pour fournir une tension à la première interface (166) et un second circuit (164) pour fournir une tension à la seconde interface (168), dans lequel le premier circuit (162) est galvaniquement séparé du second circuit (164).

11. Système de freinage (100) selon la revendication 10, **caractérisé en ce que** les circuits (162, 164) sont, en cas de défaillance de l'une des sources d'énergie (116, 118), chacun alimentés en tension par l'autre circuit (162, 164) correspondant.

12. Système de freinage (100) selon l'une quelconque des revendications 7 à 11, **caractérisé en ce que** l'unité de transmission d'énergie (160) est conçue de manière à alimenter, en cas de défaillance de l'une des sources d'énergie (116, 118), le frein de roue affecté par la défaillance (108, 110, 112, 114) en énergie avec une puissance maximale définie.
